Europäisches Patentamt

European Patent Office

Office européen des brevets

(19)

(11) Numéro de publication: **0 035 963**
**B1**

(12)     FASCICULE DE BREVET EUROPEEN

(45) Date de publication du fascicule du brevet:
15.02.84

(51) Int. Cl.³: **B 28 D 5/00**

(21) Numéro de dépôt: **81810041.4**

(22) Date de dépôt: **12.02.81**

(54) **Installation de sciage de matériaux en plaque.**

(30) Priorité: **10.03.80 CH 1853/80**

(43) Date de publication de la demande:
**16.09.81 Bulletin 81/37**

(45) Mention de la délivrance du brevet:
**15.02.84 Bulletin 84/7**

(84) Etats contractants désignés:
**CH DE FR GB LI**

(56) Documents cités:
**DE - B - 2 823 869**
**SU - A - 186 269**
**US - A - 3 131 476**

**IBM TECHNICAL DISCLOSURE BULLETIN vol. 13, no. 7, décembre 1970 New York, USA A.N. BUDIN "Dicing device" page 2058**

(73) Titulaire: **Les Fabriques d'Assortiments Réunies, 57, rue Girardet, CH-2400 Le Locle (CH)**

(72) Inventeur: **Wirz, Gustav, Störchelstrasse 8, CH-8572 Berg (CH)**
Inventeur: **Pizzagalli, Franco, rue de la Paix 150, CH-2300 La Chaux-de-Fonds (CH)**

(74) Mandataire: **Gresset, Jean et al, ASUAG Département Brevets et Licences Faubourg du Lac 6, CH-2501 Bienne (CH)**

### Installation de sciage de matériaux en plaque

La présente invention concerne une installation de sciage de matériaux en plaque. Elle concerne plus particulièrement une installation de sciage de tranches de matériau semi-conducteur sur lesquelles a été préalablement réalisé un grand nombre de circuits intégrés, de façon à former des plaquettes semi-conductrices élémentaires.

Les installations de sciage de l'art antérieur, du type par exemple de celles commercialisées sous les dénominations DAD 2 H/5 et DAD 2H/6 par la société dite Disco Abrasive Systems Ltd., Tokyo, Japon, ou sous la dénomination 106 A par la société dite Electroglas Inc., Santa Clara, USA, comprennent généralement une scie à disque diamanté qui vient découper la tranche semi-conductrice préalablement disposée sous le disque, sur un plateau porteur. Pour assurer que les traits de scie coïncideront effectivement avec les zones de la tranche séparant les circuits élémentaires, on procède avant chaque opération de sciage à une opération d'alignement qui consiste à déplacer le plateau relativement à l'outil de sciage de telle façon que la tranche qu'il porte soit elle-même correctement orientée. L'alignement est effectué au poste de sciage de l'installation et contrôlé au moyen d'un système optique adjacent à ce poste.

Ce type d'installation présente un certain nombre de désavantages inhérents à sa structure. En particulier, pendant toute la durée de l'opération d'alignement, l'outil de sciage n'est pas utilisé, ce qui réduit d'autant le rendement de l'installation. Dans le même ordre d'idée, on notera que le moment où doit s'effectuer l'alignement étant déterminé par le cycle de fonctionnement de l'outil de sciage, il est nécessaire que l'opérateur soit disponible au moment précis de la fin du sciage d'une tranche, pour réaliser le plus vite possible l'alignement de la tranche suivante. Il ne pourra donc desservir à plein rendement plusieurs installations de sciage. Par ailleurs, le système optique d'alignement étant logé à proximité immédiate de la scie, sa présence s'avère gênante lorsqu'on cherche à isoler le poste de sciage de l'environnement par un capot de protection adéquat, par exemple pour en réduire le bruit de fonctionnement.

En outre, dans les dispositifs de l'art antérieur, le plateau porteur des tranches semi-conductrices doit remplir un nombre important de fonctions qui compliquent sa construction. En particulier, il doit assurer le maintien de la tranche, son orientation selon un axe de rotation vertical en deux axes de translation orthogonaux, son positionnement en hauteur, son déplacement alternatif selon un axe perpendiculaire à celui de l'axe de la scie pendant le sciage, et sa rotation précise à 90° après qu'une première série de traits de scie parallèles ait été réalisée. Cette complexité explique que les plateaux porteurs ne sont habituellement pas déplaçables jusqu'à un poste de nettoyage des tranches sciées, ce qui oblige à décharger le plateau avant cette opération et à transporter les tranches à l'écart pour leur nettoyage.

Dans le bulletin IBM Technical Disclosure Vol. 13 No. 7 Décembre 1970, page 2058 est décrite une installation de sciage dans laquelle les plaques de matériaux semi-conducteurs sont montées sur un mécanisme d'indexation à quatre positions décalées angulairement de 90°, tournant autour d'un axe horizontal. Dans l'une des positions on charge une plaque liée à un support de matériau phénolique. Dans les deux positions suivantes, deux séries de traits de scie orthogonaux sont pratiquées au moyen de deux scies comportant chacune une pluralité de disques parallèles espacés. Une nouvelle relation de 90° amène alors la plaque à un poste de nettoyage, puis le mécanisme est ramené dans la position de départ dans laquelle la plaque est déchargée.

Dans cette installation est bien prévu un poste de nettoyage, mais elle ne comporte pas de poste d'alignement des plaques sur leur support. Cet alignement doit donc être effectué à l'écart de l'installation, et il n'est pas prévu de moyens de transfert permettant d'amener les plaques du poste d'alignement à celui de chargement de l'installation. En outre, le dispositif décrit ne saurait fonctionner qu'avec des plaques adhérentes à leur support, mais non maintenue sur celui-ci par aspiration seulement.

Le brevet américain 3 131 476 décrit une installation de «scribing» qui permet de tracer sur une plaque de semi-conducteur des lignes servant d'amorce de rupture lors d'une étape ultérieure de fragmentation de la plaque. Dans cette installation, qui ne prévoit pas de poste de nettoyage, les plaques sont retenues par aspiration sur deux plateaux porteurs eux-mêmes retenus par aspiration sur deux supports intermédiaires identiques. Les supports sont placés et positionnés manuellement soit sous un dispositif d'alignement, soit sous le poste de traçage. Le transfert des supports est également effectué manuellement, et pendant toutes les phases du traitement d'une plaque, le plateau correspondant reste assujetti sur son support. La dépression réalisant l'aspiration est maintenue au moyen d'un conduit souple qui reste solidaire du même support. Cette installation ne met pas en oeuvre un poste de nettoyage, ni un dispositif de manutention comportant deux moyens de transfert distincts pour retenir et transférer les plateaux porteurs munis de leur plaque entre les différents poste de l'installation.

C'est pourquoi l'un des objets de l'invention est de prévoir une installation de sciage comportant trois postes distincts pour l'alignement, le sciage et le nettoyage et un dispositif de manutention pour déplacer les tranches semi-conductrices à ces différents postes. Le dispositif de manutention est prévu pour que le sciage d'une tranche puisse s'effectuer pendant l'alignement de la tranche suivante ou le nettoyage de la précédente.

Un autre objet de l'invention est de prévoir un dispositif de manutention des tranches semi-conductrices qui utilise au moins deux plateaux porteurs indépendants susceptibles chacun d'être positionné sur des premiers ou des deuxièmes moyens de transfert. Chaque plateau porteur n'assure que le maintien de la tranche qu'il reçoit, qui est elle-même déposée selon une orientation parfaitement déterminée au poste d'alignement. Les premiers moyens de transfert assurent un déplacement de la tranche vers le poste de sciage lui conservant parfaitement cette orientation initiale sur le plateau, une rotation précise du plateau à 90° sous la scie et son positionnement en hauteur, et l'amènent au poste de nettoyage. Les deuxièmes moyens de transfert moins précis ramènent les plateaux du poste de nettoyage au poste d'alignement. Ainsi, le dispositif de positionnement des tranches sur les plateaux peut être beaucoup plus simple, et facilement automatisable, puisqu'il reste solidaire du poste d'alignement et indépendant du plateau porteur. Les premiers moyens de transfert, qui assurent la précision de l'orientation de la tranche sous la scie sont simplifiés d'autant et ne réalisent qu'un déplacement axial parfait des plateaux porteurs, leur rotation à 90° sous la scie et leur réglage en hauteur.

La présente invention sera bien comprise à la lecture de la description suivante, faite en relation avec les figures jointes, parmis lesquelles:

— la figure 1 est une vue générale en perspective de l'installation de sciage selon l'invention, dont certaines parties ont été découpées pour une meilleure représentation;

— la figure 2 est une vue de dessus du support fixe des postes d'alignement et de nettoyage, ainsi que des deuxièmes moyens de transfert de l'installation de la figure 1;

— la figure 3 est une vue de côté des éléments représentés dans la figures 2;

— la figure 4 est une vue schématique en coupe des premiers moyens de transfert de la figure 1; et

— la figure 5 est une vue schématique en perspective des premiers moyens de transfert de la figure 4.

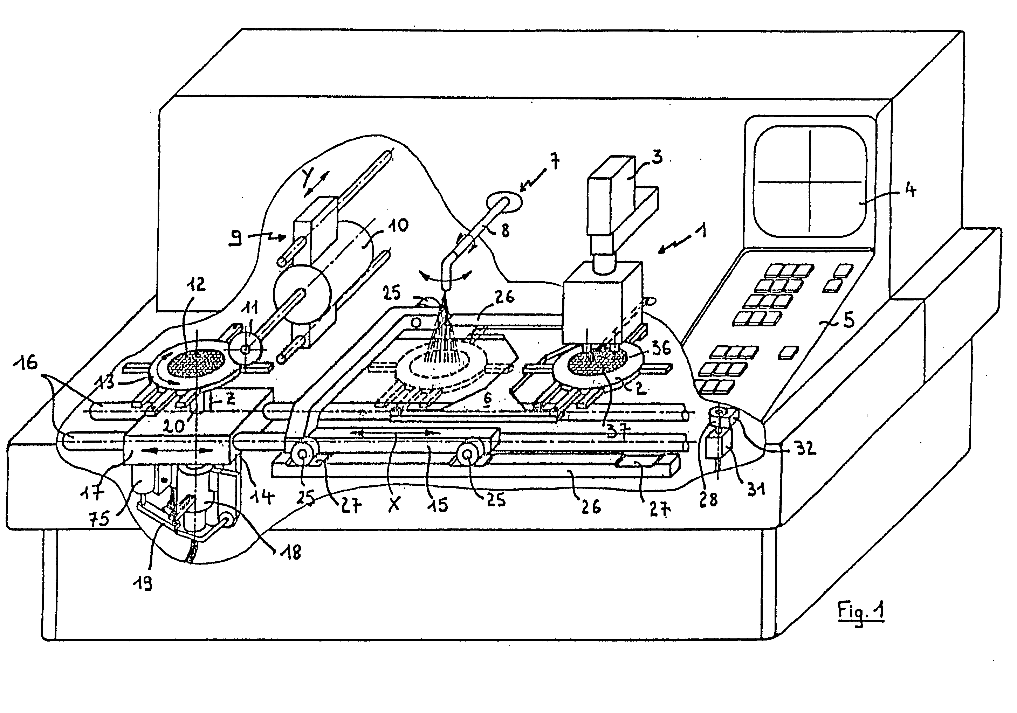

Comme on le voit au mieux sur la figure 1, l'installation de sciage comporte trois postes de travail généralement référencés 1, 7 et 9 alignés sur un même axe. Au poste d'alignement 1, une tranche semi-conductrice 37 est déposée sur un plateau-porteur 2, qui repose lui-même sur un support fixe 6 et orientée convenablement au moyen d'un dispositif de positionnement 36. Un système optique d'alignement 3 permet de former sur un écran 4 l'image d'une zone de la tranche semi-conductrice à laquelle est superposée une image de référence. Une unité de commande 5 permet à un opérateur de piloter le dispositif de positionnement de façon à réaliser la coïncidence des deux images. Au poste de sciage 9 est montée une scie à disque diamanté 11 prévue pour réaliser des séries de traits de scie parallèles sur la tranche 12 portée par un deuxième plateau-porteur 13 identique au plateau 2. Le disque 11 est entraîné par un moteur 10. Enfin, au poste de nettoyage 7 disposé entre les postes 1 et 9, une buse d'éjection 8 à mouvement oscillant réalise le nettoyage au moyen d'un agent de nettoyage approprié, puis le séchage des tranches fraîchement sciées, portées encore par leur plateau, représenté en traits pointillés sur le même support fixe 6.

L'installation de sciage comporte de plus un dispositif de manutention constitué, outre les deux plateaux 2 et 13, par des premiers moyens de transfert 14 et des seconds moyens de transfert 15.

Les premiers moyens de transfert 14 forment une table mobile dont la fonction est de pendre chaque plateau, équipée d'une tranche ou poste d'alignement 1, de l'amener en lui conservant parfaitement son orientation au poste de sciage 9, de le soutenir et l'orienter convenablement pendant l'opération de sciage, puis de l'amener et le déposer au poste de nettoyage 7. A cet effet, la table 14 comporte un bâti 17 monté coulissant sur un ou plusieurs axes 16 parallèles à la direction des postes de travail représentée par la flèche X. Une tourelle schématisée 18 est articulée sur le bâti 17 de façon à pouvoir subir une rotation précise de 90°, dans l'un ou l'autre sens, autour d'un axe vertical sous l'action d'un moteur 75 auquel elle est raccordée par l'intermédiaire d'un mécanisme à Croix de Malte 19. La tourelle 18 reçoit un arbre central 20 réglable en hauteur selon l'axe Z et dont l'axtrémité superieure est adaptée pour recevoir les plateaux 2 ou 13.

La fonction des deuxièmes moyens de transfert 15 est de ramener successivement chaque plateau 2 ou 13 du poste de nettoyage 7 au poste d'alignement 1. Ils sont constitués par un support mobile en forme d'équerre guidée par trois roulettes 25 des rails 26 parallèles à la direction de la flèche X, et dont le profil évolutif comporte des creux 27.

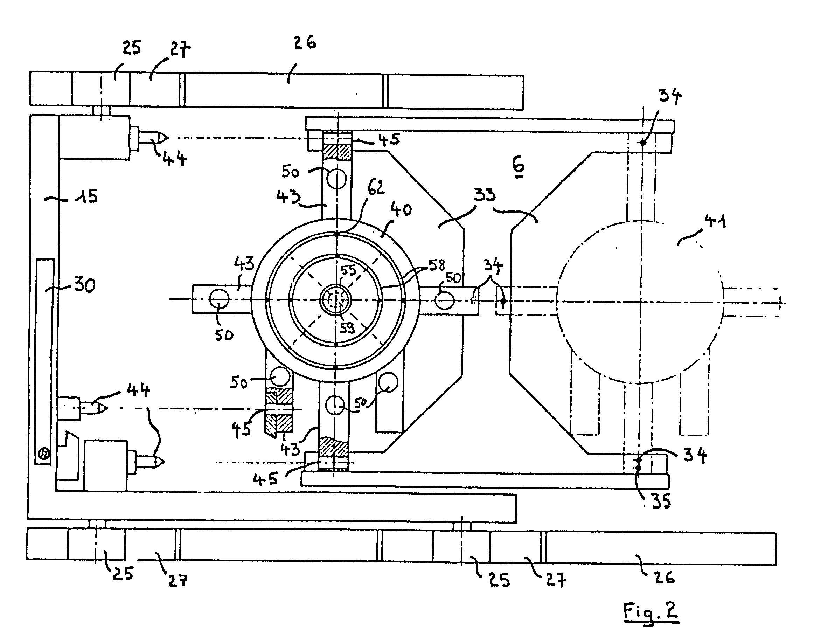

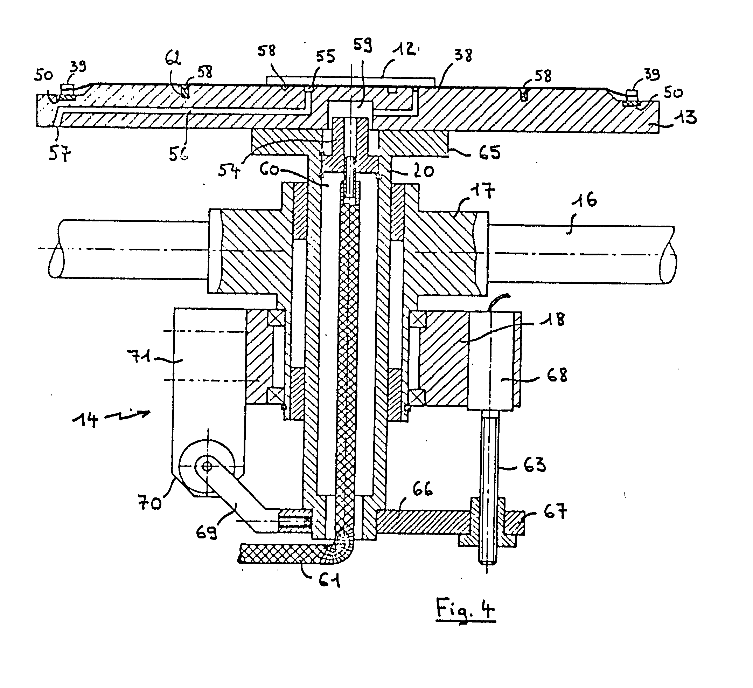

Comme on le verra ci-dessous en relation avec les figures 2 et 4, chaque plateau-porteur comprend en outre des moyens pour retenir par aspiration une tranche semi-conductrice qui collaborent alternativement avec le support fixe 6 et la table mobile 14 pour que cet effet d'aspiration soit réalisé lorsque le plateau est porté par l'un ou par l'autre.

Le fonctionnement de l'installation est le suivant. Tout d'abord, l'opérateur réalise l'alignement d'une tranche sur le plateau 2, au poste d'alignement 1. A ce moment, la position du plateau 2 sur le support fixe 6 n'est pas critique, puisqu'il suffira que la table mobile 14 amène ce plateau au poste de sciage en lui conservant parfaitement son orientation, pour que la tranche préalablement orientée sous le poste 1 se retrouve dans une position correcte sous le disque 11 de la scie 10. Après l'alignement, la table mobile 14 vient se placer sous le plateau 2 et la précision de sa position dans la direction X est garantie par une butée escamotable 28 formée par une tige d'un matériau de dureté élevée, actionnée par un électroaimant 31 et maintenue latéralement par une pièce 32 présentant une gorge en V. La butée 28 limite le mouvement de la table mobile 14 vers la droite. L'arbre vertical 20 est alors déplacé en hauteur et son extrémité supérieure vient s'adapter sous le plateau 2 pour le soulever. Puis la butée 28 est escamotée et le plateau 2 est dégagé du support 6 par la droite. L'arbre 20 est ensuite abaissé pour que la table 14 puisse passer sous le poste de nettoyage 7 et l'équerre 15, afin de venir sous le poste de sciage 9. Là la hauteur du plateau est à nouveau amenée à une valeur prédéterminée, et une première série de traits de scie parallèles à la direction X réalisée. Pour ce faire, le bâti 17 est animé d'un mouvement alternatif dans la direction X sous le poste de sciage et, entre chaque alternance, la scie est déplacée d'un pas dans la direction perpendiculaire Y. A la fin de cette série, la tourelle est entraînée en rotation de 90° autour de son axe et une deuxième série de traits parallèles réalisée. Pendant l'opération de sciage, l'opérateur réalise l'alignement d'une nouvelle tranche sur le deuxième plateau, au poste d'alignement 1. A l'issue du sciage, la table 14 amène le plateau qu'elle porte au poste de nettoyage où elle le dépose sur le support fixe 6 dans la position représentée par les traits pointillés, puis elle vient prendre le deuxième plateau au poste d'alignement 1 et son cycle de fonctionnement recommence.

Lorsque le nettoyage d'une tranche est terminé, elle est déchargée de son plateau-porteur. L'équerre 15 est alors déplacée, par exemple manuellement par l'opérateur qui la saisit par la poignée 30, dans la direction du poste d'alignement 1. Le profil évolutif des rails 26 est adapté pour que l'équerre 15 vienne engager latéralement le plateau au poste de nettoyage 7, le soulever et l'amener en position, de l'autre côté du support 6, où il est prêt pour recevoir une nouvelle tranche. L'équerre 15 est alors ramenée vers la gauche dans sa position initiale. Une dispositif de sécurité peut être prévu pour éviter que la table 14 ne vienne déposer un plateau au poste de nettoyage 7 lorsque l'équerre 15 n'est pas revenue dans cette position initiale.

Ainsi, on voit aisément que selon l'invention, l'alignement précis des tranches est réalisé par un dispositif de positionnement fixe, tandis que la table mobile 14 ne garantit que le maintien de l'orientation précise du plateau pendant son transfert, son réglage en hauteur et sa rotation à 90°. Le déplacement de l'équerre 15 n'est pas quant à lui assujetti à des impératifs de précision extrêmes.

La figure 2 représente le support fixe 6 qui présente deux échancrures 33 pour les plateaux-porteurs sous les postes de nettoyage 7 (plateau 40) ou d'alignement 1 (plateau 41 en traits pointillés). Chaque plateau comporte des pattes radiales 43 par lesquelles il s'appuie sur les contours du support 6 où il est maintenu par aspiration, grâce aux conduites de vide 34 débouchant à la surface supérieure de ce support, aux endroits où viennent s'appliquer les pattes 43. En outre, et comme on le voit dans la figure 4, l'une des pattes de chaques plateau comporte un conduit 56 pour raccorder une rainure annulaire de la surface du plateau au débouché 35 d'une conduite correspondante du support 6 et ainsi maintenir une tranche semi-conductrice sur le plateau par la dépression créée par une première source de dépression lorsque le plateau est en place sur le support 6. Lorsque la tranche est préalablement collée à la surface d'une feuille souple 38 (fig. 4), des pastilles magnétiques 50 prévues sur les pattes 43 permettent de retenir un cerclage métallique 39 qui en assure la tension. Ces pastilles 50 n'ont pas de fonction lorsque la tranche est préalablement collée sur une plaque de matériau rigide.

On a représenté également sur la figure 2 les deuxièmes moyens de transfert 15, formés par une équerre guidée par les roulettes 25 sur les rails 26. L'équerre 15 comporte trois tétons d'accrochage 44 qui viennent s'engager latéralement avec trois alésages correspondants 45 de trois pattes 43 des plateaux-porteurs. L'équerre 15 peut être aisément retirée des rails 26 et utilisée par l'opérateur pour transporter un plateau à l'écart de l'installation, pour une opération quelconque. Un organe de verrouillage 46 permet alors de solidariser momentanément le plateau de l'équerre.

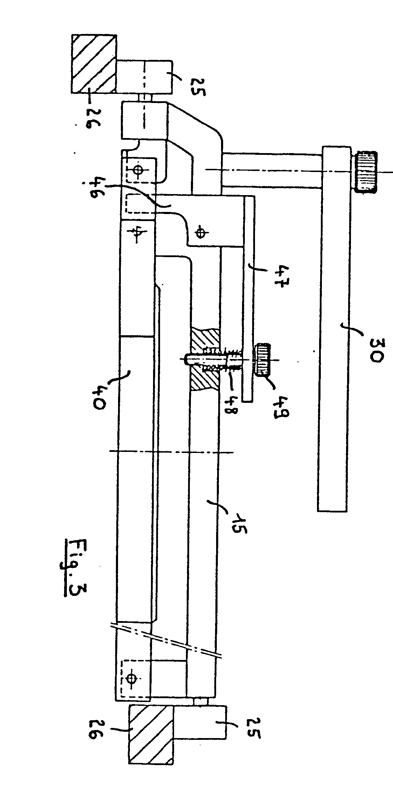

La figure 3 est une vue latérale de l'ensemble représenté dans la figure 2, et on y reconnaît l'équerre 15, les roulettes 25, les rails 26, le plateau 40 et la poignée 30. En outre, un levier 47 rappelé par un ressort de compression 48 permet de dégager l'organe de verrouillage 46 et de libérer le plateau 40. Le levier 47 peut être bloqué par une vis de sécurité 49.

Dans la figure 4, on a représenté en coupe la table mobile 14 du dispositif de manutention de l'invention, soutenant un plateau 13 qui a reçu une tranche semi- conductrice 12. Le plateau 13 présente sur sa surface supérieure une rainure annulaire 55 susceptible d'être raccordée à une première source de dépression par une conduite 56 débouche en 57, à l'extrémité d'une patte radiale 43, au regard d'une conduite correspondante du support lorsque le plateau est en place sur le support 6, aux postes d'alignement ou de nettoyage. Le plateau 13 présente en outre une série de rainures concentriques 58 raccordées à un alésage central 59 qui vient s'adapter lorsque le plateau est positionné sur la table 14, sur une buse d'aspiration 54 disposée à l'extrémité supérieure d'un alésage central 60 de ce dernier, et raccordée à une seconde source de dépression par le tuyau souple 61. De cette manière, on voit que la tranche 12 est maintenue sur le plateau 13 par aspiration, que ce dernier soit positionné sur le support fixe 6 ou sur la table mobile 14. Bien entendu, une source de dépression unique pourrait être utilisée pour l'alimentation de l'installation complète. Les rainures concentriques 58 sont subdivisées en plusieurs portions susceptibles d'être isolées par des vis 62 pour permettre au plateau de recevoir des pièces de formes et de dimensions variables.

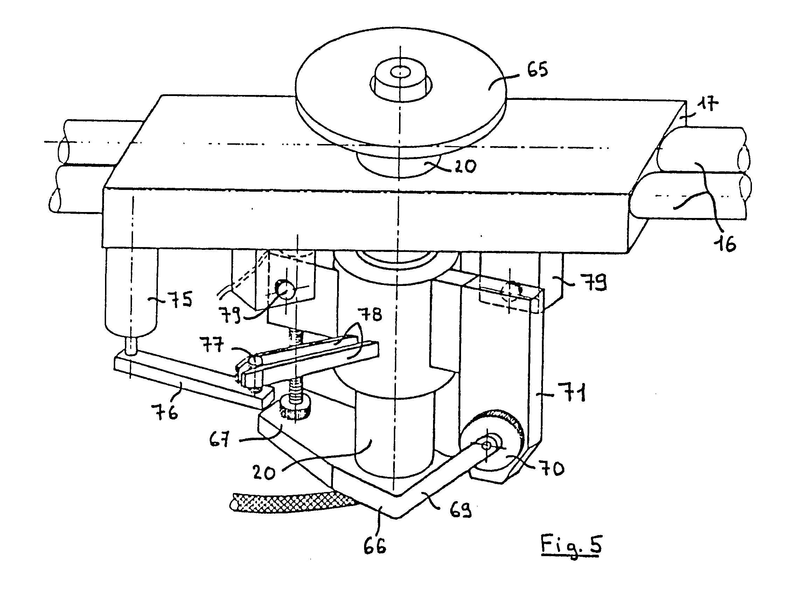

La table mobile 14 comprend un bâti 17 monté coulissant sur au moins un arbre 16 au moyen de paliers à air, et entraîné par moteur, par exemple par l'intermédiaire d'une chaîne. Une tourelle 18 est montée en rotation sur le bâti 17 de façon à pouvoir subir une rotation de 90° autour de son axe vertical. Le mécanisme commandant cette rotation sera déscrit plus en détails en référence à la figure 5. La tourelle 18 reçoit en coulissement un arbre vertical 20 donc l'extrémité supérieure 65 reçoit le plateau 13. L'extrémité inférieure de l'arbre 20 est solidaire d'un levier transversal 66 dont l'un des bras 67 est actionné verticalement par un moteur 68 assujetti à la tourelle 18, par l'intermédiaire d'une tige filetée 63. L'autre bras 69 porte deux butées à air 70 dirigées l'une vers l'autre et dans l'intervalle desquelles se projette une plaque de guidage 71 solidaire également de la tourelle 18. On évite ainsi que le réglage en hauteur de l'arbre 20 induise une modification de l'orientation angulaire du plateau 13.

Comme on le voit au mieux dans la figure 5, la tourelle 18 est manoeuvrée en rotation sur 90° par un mécanisme à Croix de Malte. L'entraînement est réalisé par un moteur 75 solidaire du bâti 17 qui actionne une traverse 76 et effectue une rotation de 90° dans un sens ou dans l'autre. L'extrémité opposée de la traverse 16 porte une roulette 77 qui roule dans un espace défini par deux bras 78 saillant radialement de la tourelle. De préférence, ces bras forment des lames de ressort se reserrant à leur extrémité libre et dont la contrainte maintient la roulette en position de la fin de course. La précision de l'orientation angulaire de la tourelle dans l'une ou dans l'autre de ses positions extrêmes décalées à 90° l'une de l'autre est garantie par des butées 79 solidaires au bâti 17 contre lesquelles vient alternativement s'appuyer la plaque de guidage 71.

Bien qu'elle ait été déscrite en relation avec un mode de réalisation particulier, la présente invention est susceptible de nombreuses modifications et variantes qui apparaîtront à l'homme de l'art.

Ainsi, elle ne se limite pas au sciage de matériau semi-conducteur et d'autres installations peuvent incorporer le dispositif de manutention de l'invention. Ce dispositif est pariculièrement intéressant lorsqu'il s'agit d'effectuer une opération nécessitant un positionnement très précis de la pièce à traiter et que l'on désire réaliser ce positionnement à l'écart du poste où cette opération est menée.

On comprendra également que le dispositif se prête particulièrement bien à une commande automatisée par micro-processeur, incluant même l'actionnement automatique des seconds moyens de transfert.

## Revendications

1. Installation pour le sciage de matériaux en plaque, de façon à former une pluralité de plaquettes élémentaires, caractérisée en ce qu'elle comprend notamment:
— un poste d'alignement (1) où les plaques (37) reçoivent une orientation prédéterminée;
— un poste de sciage (9) oú les plaques sont divisées en une pluralité de plaquettes élémentaires;
— un poste de nettoyage (7) où les plaques sciées sont soumises à l'action d'un agent de nettoyage;
— un dispositif de manutention pour amener chaque plaque aux postes successifs de l'installation, ce dispositif de manutention étant adapté de façon que le sciage d'une plaque puisse s'effectuer pendant le nettoyage de la plaque précédente ou l'alignement de la plaque suivante et comportant:
— au moins deux plateaux porteurs indépendants (2, 13) prevus pour recevoir et maintenir une plaque dans une orientation prédéterminée relativement à ce plateau,
— des premiers moyens de transfert (14) pour successivement prendre chaque plateau (2, 13) équipé d'une plaque au poste d'alignement (1), l'amener en lui conservant une orientation précise au poste de sciage (9), le soutenir et l'orienter convenablement pendant l'opération de découpe, puis l'amener et le déposer au poste de nettoyage (7),
— des seconds moyens de transfert (15) pour prendre chaque plateau au poste de nettoyage, l'amener et le déposer au poste d'alignement.

2. Installation selon la revendication 1, caractérisée en ce que les postes d'alignement (1), de sciage (9) et de nettoyage (7) sont alignés, le poste de nettoyage étant disposé entre les deux autres postes, en ce que les premiers moyens de transfert (14) sont déplaçables axialement parallèlement à l'axe des postes, et en hauteur, et en ce que les deuxièmes moyens de transfert (15) sont déplaçable axialement parallèlement à l'axe des postes.

3. Installation selon la revendication 2, caractérisée en ce que les premiers moyens de transfert (14) peuvent tourner précisément d'un angle de 90° autour de la verticale.

4. Installation selon l'une quelconque des revendications 2 ou 3, caractérisée en ce que les premiers moyens de transfert (14) passent sous les deuxièmes moyens de transfert (15) dans leur déplacement axial, lorsqu'ils amènent un plateau porteur (2, 13) du poste d'alignement au poste de sciage (9) ou lorsqu'après avoir déposé un plateau au poste de nettoyage (7), ils retournent prendre un autre plateau au poste d'alignement(1).

5. Installation selon l'une des revendications 1 à 4, caractérisée en ce qu'elle comporte un support fixe (6) solidaire des postes d'alignement (1) et de nettoyage (7), et en ce que chaque plateau (2, 13) est en outre prévu pour recevoir et maintenir une pièce dans une orientation prédéterminée, qu'il soit positioné dans ledit support (6) ou sur les premiers moyens de transfert (14).

6. Installation selon la revendication 5, caractérisé en ce que chaque plateau porteur (2, 13) présente sur sa surface supérieure prévue pour recevoir une pièce, une rainure annulaire (55) susceptible d'être raccordée à une première source de dépression lorsque le plateau est positionné dans le support fixe, et en ce qu'il présente en outre une série de rainures concentriques (58) susceptibles d'être raccordées à une deuxième source de dépression raccordée aux premiers moyens de transfert (14), lorsqu'il est positionné sur ces premiers moyens de transfert.

7. Installation selon la revendication 6, caractérisée en ce que les rainures concentriques (58) comportent des portions susceptibles d'être isolées pour permettre au plateau de recevoir des plaques de formes et dimensions variables.

8. Installation selon la revendication 6 ou 7, caractérisée en ce que le plateau porteur comporte une pluralité de pattes radiales (43) par lesquelles il est positionné dans le support fixe (6), et en ce que dans une de ces pattes est pratiqué un conduit (56) dont l'une des extrémités débouche dans la rainure annulaire (55) et dont l'autre extrémité débouche en regard d'une conduite correspondante (35) du support, raccordée à la première source de dépression.

9. Installation selon l'une quelconque des revendications 6 à 8, caractérisée en ce que les rainures concentriques (58) débouchent dans un alésage central (59) du plateau porteur, cet alésage étant disposé lorsque le plateau est positionné sur les premiers moyens de transfert, dans le prolongement d'un alésage correspodant (60) de ces moyens de transfert, raccordé à la deuxième source de dépression.

10. Installation selon l'une quelconque des revendications 8 ou 9, caractérisée en ce que les pattes radiales (43) du plateau porteur sont munies en outre de pastilles magnétiques (50) pour assurer le maintien d'une feuille souple (38) placée sur le plateau.

11. Installation selon l'une quelconque des revendications 5 à 10, caractérisée en ce que les premiers moyens de transfert comportent un bâti (17) monté coulissant sur au moins un arbre (16) au moyen de paliers à air.

12. Installation selon la revendication 11, caractérisée en ce que les premiers moyens de transfert comportent une tourelle susceptible de subir une rotation relative au bâti (17) d'un angle de 90° autour d'un axe vertical.

13. Installation selon la revendication 12, caractérisée en ce que la tourelle est articulée sur le bâti par l'intermediaire d'un système en «Crois de Malte» (19).

14. Installation selon la revendication 13, caractérisée en ce que la tourelle est maintenue en position de fin de course par la contrainte de lames de ressorts (78).

15. Installation selon l'une quelconque des revendications 12 à 14, caractérisée en ce que la tourelle reçoit un arbre (20) réglable en hauteur et dont l'extrémité supérieure est adaptée pour recevoir les plateaux porteurs, l'arbre étant guidé par des paliers à air.

16. Installation selon la revendication 15, caractérisée en ce que l'arbre (20) est maintenu en position angulaire pendant son déplacement en hauteur au moyen de deux butées à air (70) dirigées de part et d'autre d'une plaque de guidage verticale (71) solidaire de la tourelle (18).

17. Installation selon l'une des revendications 8 à 16, caractérisée en ce que les seconds moyens de transfert (15) s'engagent latéralement avec au moins trois pattes radiales (43) des plateaux porteurs.

18. Installation selon la revendication 17, caractérisée en ce que les seconds moyens de transfert sont constitués par un support en forme d'équerre guidée par des roulettes sur (25) deux rails parallèles (26).

19. Installation selon la revendication 18, caractérisée en ce que l'équerre comporte trois tétons d'accrochage (44) collaborant avec des alésages (45) de trois pattes radiales (43) des plateaux porteurs.

20. Installation selon la revendication 18 ou 19 caractérisée en ce que les rails (26) présentent un profil évolutif.

21. Installation selon l'une quelconque des revendications 5 à 20 caractérisée en ce que les seconds moyens de transfert (15) comportent en outre un organe de verrouillage (46) pour verrouiller en place le plateau porteur.

22. Installation selon l'une quelconque des revendications 18 à 21, caractérisée en ce que les seconds moyens de transfert (15) sont déplaçables manuellement sur leurs rails (26).

23. Installation selon l'une quelconque des revendications 11 à 16, caractérisée en ce qu'elle comprend en outre une butée escamotable (28) pour assurer lorsqu'elle est en place le positionnement précis des premiers moyens de transfert (14) en un point déterminé de leur trajectoire de coulissement et pour leur permettre de se déplacer au-delà de ce point lorsqu'elle est escamotée, pour assurer le dégagement du plateau porteur de son support fixe (16).

24. Installation selon la revendication 23, caractérisée en ce que la butée (28) est une tige d'un matériau de dureté élevée, actionnée par un électroaimant et maintenue latéralement par une pièce à gorge en V (32).

25. Installation selon la revendication 16, caractérisée en ce que l'arbre réglable en hauteur (20) des premiers moyens de transfert est raccordé par son extrémité inférieure à un levier transversal (66) dont l'un des bras (67) est actionné par un moteur et dont l'autre bras (69) porte lesdites butées à air (70).

## Claims

1. Apparatus for sawing plates of material into a plurality of smaller elemental plates, characterized in that it comprises:

— an aligning station (1) at which the plates (37) receive a predetermined orientation;

— a sawing station at which the plates are divided into a plurality of smaller elemental plates;

— a cleaning station at which the sawn plates are subjected to the action of a cleaning agent;

— a handling arrangement for conveying each plate to the successive stations of the apparatus, said handling arrangement providing for the sawing of a plate to take place while the previous plate is being cleaned or while the following plate is being aligned and including:

— at least two independent carrier trays (2, 13) for receiving and holding a plate in a predetermined orientation in relation to the tray,

— first transfer means (14) for successively picking up each tray at the aligning station (1) when bearing a plate, conveying it with a precise orientation to the sawing station (9), appropriately supporting and orienting it during the cutting operation, then conveying it to and depositing it at the cleaning station (7),

— second transfer means (15) for picking up each tray at the cleaning station, then conveying it to and depositing it at the aligning station.

2. Apparatus as in claim 1, characterized in that the aligning, sawing and cleaning stations (1, 9, 7) are in alignment with the cleaning station lying between the other two stations, in that the first transfer means (14) are movable axially parallel to the axis of the stations and vertically, and in that the second transfer means (15) are movable axially parallel to the axis of the stations.

3. Apparatus as in claim 2, characterized in that the first transfer means (14) can rotate accurately through 90° about a vertical axis.

4. Apparatus as in any of claims 2 and 3, characterized in that the first transfer means (14) pass under the second transfer means (15) during axial displacement thereof when conveying a carrier tray (2, 13) from the aligning station to the sawing station (9) or, after having deposited a tray at the cleaning station (7), they return to pick up another tray at the aligning station (1).

5. Apparatus as in any of claims 1 to 4, characterized in that it comprises a stationary support (6) mounted at the aligning and cleaning stations (1, 7), and in that each tray (2, 13) is further arranged to receive and hold a plate in a predetermined orientation, whether located in said support (6) or on the first transfer means (14).

6. Apparatus as in claim 5, characterized in that each carrier tray (2, 13) has in its top plate-bearing surface an annular groove (55) connectable to a first vacuum source when said tray is positioned in said stationary support, and in that each carrier tray further has a series of concentric grooves (58) connectable to a second vacuum source connected to said first transfer means (14) when said tray is positioned on said first transfer means.

7. Apparatus as in claim 6, characterized in that the concentric grooves (58) include portions adapted to be isolated to enable said tray to receive plates of different shapes and sizes.

8. Apparatus as in claim 6 or 7, characterized in that the carrier tray includes a plurality of radial arms (43) for positioning said tray in the stationary support (6), and in that one of said arms is provided with a duct (56) having one end opening in the annular groove (55) and its other end opening opposite a corresponding duct of said support, connected to said first vacuum source.

9. Apparatus as in any of claims 6 to 8, characterized in that the concentric grooves (58) open in a central bore (59) in the associated carrier tray, said bore communicating, when the tray is located on the first transfer means, with a corresponding bore (60) in said transfer means, connected to the second vacuum source.

10. Apparatus as in any of claims 8 and 9, characterized in that the radial arms (43) of the carrier tray are further provided with magnetic pads (50) for holding down a flexible sheet (38) placed on the tray.

11. Apparatus as in any of claims 5 to 10, characterized in that the first transfer means include a base member (17) slidably mounted on at least one shaft (16) by means of air bearings.

12. Apparatus as in claim 11, characterized in that the first transfer means include a turret (18) rotatable through 90° about a vertical axis in relation to the base member (17).

13. Apparatus as in claim 12, characterized in that the turret is pivotally mounted on the base member through the intermediary of a Maltese cross system .

14. Apparatus as in claim 13, characterized in that the turret is held in its end of travel position by the stress of spring blades (78).

15. Apparatus as in any of claims 12 to 14, characterized in that the turret holds a shaft (20) that is vertically adjustable and whose upper end is adapted to receive the carrier trays, said shaft being guided by air bearings.

16. Apparatus as in claim 15, characterized in that the shaft (20) is held in its angular position during vertical displacement thereof by means of a pair of air stops (70) acting on opposite sides of a vertical guide plate (71) solid with the turret (18).

17. Apparatus as in any of claims 8 to 16, characterized in that the second transfer means (15) engage laterally with at least three radial arms (43) of the carrier trays.

18. Apparatus as in claim 17, characterized in that the second transfer means consist of a right-angled support guided by rollers (25) along a pair of parallel rails (26).

19. Apparatus as in claim 18, characterized in that the right-angled support includes three plug-in pins (44) cooperating with three bores (45) in three radial arms (43) or the carrier tray.

20. Apparatus as in claim 18 or 19, characterized in that the rails (26) have an evolutive profile.

21. Apparatus as in any of claims 5 to 20, characterized in that the second transfer means (15) further include a locking member (46) for locking in place the carrier tray.

22. Apparatus as in any of claims 18 to 21, characterized in that the second means (15) are manually movable along their rails (26).

23. Apparatus as in any of claims 11 to 16, characterized in that it futher comprises a retractable abutment (28) for accurately positioning, when in its operative position, the first transfer means (14) at a particular point along their path of sliding motion and for enabling them to move beyond said point when the retractable abutment is in its inoperative position to allow removal of the carrier tray from its stationary support (6).

24. Apparatus as in claim 23, characterized in that the abutment (28) consists of a rod made of a material having a high degree of hardness and which is actuated by an electromagnet and held laterally by a member having a V-section groove (32).

25. Apparatus as in claim 16, characterized in that the vertically adjustable shaft (20) of the first transfer means is connected at its lower end to a transverse lever (66) having one arm (67) actuated by a motor, its other arm (69) carrying said air stops (70).


**Patentansprüche**

1. Vorrichtung zum Sägen von scheibenförmigem Material derart dass eine Vielzahl elementarer Plättschen entsteht, dadurch gekennzeichnet, dass sie insbesondere aufweist:

— eine Justierstation (1), an der die Scheiben (37) eine vorgegebene Ausrichtung erhalten,

— eine Sägestation (9), an der die Scheiben in eine Vielzahl elementarer Plättchen geteilt werden,

— eine Reinigungsstation (7), an der die gesägten Scheiben der Einwirkung eines Reinigungsmittels unterworfen werden,

— eine Zuführungseinrichtung zur Zuführung der Scheiben an die aufeinanderfolgenden Stationen der Vorrichtung, wobei diese Zuführungseinrichtung derart ausgestaltet ist, dass das Sägen einer Scheibe während der Reinigung der vorausgehenden Scheibe oder dem Justieren der folgenden Scheibe ausgeführt werden kann, und besteht aus

— wenigstens zwei unabhängigen Trägerplatten (2, 13), die zur Aufnahme und zum Festhalten einer Scheibe mit einer relativ zu dieser Platte vorgegebenen Ausrichtung vorgesehen sind,

— eines ersten Transporteinrichtung (14) zur nacheinander erfolgenden Aufnahme der mit einer Scheibe versehenen Platte (2, 13) an der Justierstation, Zuführen derselben unter Beibehaltung der genauen Ausrichtung zur Sägestation (9), Abstützen und geeignetem Ausrichten während des Zerschneidens, folgendes Zuführen und Absetzen an der Reinigungsstation (7)

— eines zweiten Transporteinrichtung (15) zum Aufnehmen jeder Platte an der Reinigungsstation und Zuführen und Absetzen an der Justierstation.

2. Vorrichtung nach Anspruch 1, dadurch gekennzeichnet, dass die Justierstation (1), die Sägestation (9) und die Reinigungsstation (7) fluchten, wobei die Reinigungsstation zwichen den beiden anderen Stationen angeordnet ist, dass die erste Transporteinrichtung(14) in der Höhe und parallel zur Achse der Stationen axial verschiebbar ist, und dass die zweite Transporteinrichtung (15) parallel zur Achse der Stationen axial verschiebbar ist.

3. Vorrichtung nach Anspruch 2, dadurch gekennzeichnet, dass die erste Transporteinrichtung (14) genau um einen Winkel von 90° um die Vertikale gedreht werden kann.

4. Vorrichtung nach einem der Ansprüche 2 oder 3, dadurch gekennzeichnet, dass die erste Transporteinrichtung (14) unter der zweiten Transporteinrichtung (15) bei ihren axialen Verschiebung durchfährt, wenn sie eine Trägerplatte (2, 13) von der Justierstation zur Sägestation (9) befördert oder wenn sie nach dem Absetzen einer Platte am Reinigungsplatz (7) zur Aufnahme einer weiteren Platte zur Justierstation (1) zurückfährt.

5. Vorrichtung nach einem der Ansprüche 1 bis 4, dadurch gekennzeichnet, dass sie eine der Justierstation und der Reinigungsstation zugehörige feststehende Auflage (6) enthält, und dass jede Platte (2, 13) ausserdem dafür vorgesehen ist, ein Teil mit einer vorgegebenen Ausrichtung aufzunehmen und zu halten, das sich entweder auf der genannten Auflage (6) oder auf der ersten Transporteinrichtung (14) befindet.

6. Vorrichtung nach Anspruch 5, dadurch gekennzeichnet, dass jede der Trägerplatten (2, 13) auf der für die Aufnahme eines Teils vorgesehenen Oberseite eine ringförmige Nut (55) für die Verbindung mit einer ersten Unterdruckquelle aufweist, wenn sich die Platte auf der festen Auflage befindet, und dass jede ausserdem eine Reihe konzentrischer Nuten (58) für die Verbindung mit einer zweiten Unterdruckquelle aufweist die mit der ersten Transporteinrichtung verbunden ist, wenn sie sich auf der ersten Transporteinrichtung befindet.

7. Vorrichtung nach Anspruch 6, dadurch gekennzeichnet, dass die konzentrischen Nuten (58) Abschnitte enthalten, die isoliert werden können, um die Aufnahme von Scheiben verschiedener Formen und Grössen auf der Platte zu ermöglichen.

8. Vorrichtung nach Anspruch 6 oder 7, dadurch gekennzeichnet, dass die Trägerplatte eine Vielzahl von radialen Laschen (43) aufweist, durch die sie auf der festen Auflage (6) positioniert ist, und dass in einer dieser Laschen eine Leitung (56) ausgebildet ist, die an einem Ende in die ringförmige Nut (55) mündet und die am anderen Ende gegenüber einer der Auflage zugeordneten Leitung (35) mündet, die mit der ersten Unterdruckquelle verbunden ist.

9. Vorrichtung nach einem der Ansprüche 6 bis 8, dadurch gekennzeichnet, dass die konzentrischen Nuten (58) in eine zentrale Bohrung (59) der Trägerplatte münden, wobei diese Bohrung so angeordnet ist, dass die sich, wenn sich die Platte auf der ersten Tansporteinrichtung befindet, in die Verlängerung einer dieser Transporteinrichtung zugeordneten Bohrung (60) erstreckt, die mit der zweiten Unterdruckquelle verbunden ist.

10. Vorrichtung nach einem der Ansprüche 8 oder 9, dadurch gekennzeichnet, dass die radialen Laschen (43) der Trägerplatte ausserdem mit magnetischen Plättchen (50) versehen sind, um eine auf die Platte gelegte Weichfolie (38) zu halten.

11. Vorrichtung nach einem der Ansprüche 5 bis 10, dadurch gekennzeichnet, dass die erste Transporteinrichtung einen Rahmen (17) aufweist, der auf wenigstens einer Achse (16) über Luftlager gleitend verschiebbar angebracht ist.

12. Vorrichtung nach Anspruch 11, dadurch gekennzeichnet, dass die erste Transporteinrichtung eine Dreheinrichtung (18) enthält, die relativ zum Rahmen (17) eine Drehung um einen Winkel von 90° um eine vertikale Achse erlaubt.

13. Vorrichtung nach Anspruch 12, dadurch gekennzeichnet, dass die Dreheinrichtung am Rahmen mittels eines dazwischenliegenden Malteserkreuz-Systems (19) angelenkt ist.

14. Vorrichtung nach Anspruch 13, dadurch gekennzeichnet, dass die Dreheinrichtung in der Endstellung ihrer Bahn mittels der Spannung von Federblättern (78) gehalten wird.

15. Vorrichtung nach einem der Ansprüche 12 bis 14, dadurch gekennzeichnet, dass die Dreheinrichtung eine in der Höhe verstellbare Welle (20) enthält, deren oberes Ende zur Aufnahme der Trägerplatten vorgesehen ist und die von Luftlagern geführt wird.

16. Vorrichtung nach Anspruch 15, dadurch gekennzeichnet, dass die Welle (20) während der Höhenverstellung in ihrer Winkellage durch zwei Luftwiderlager (70) gehalten wird, die auf beiden Seiten einer fest mit der Dreheinrichtung (18) verbundenen vertikalen Führungsplatte (71) gerichtet sind.

17. Vorrichtung nach einem der Ansprüche 8 bis 16, dadurch gekennzeichnet, dass die zweite Transporteinrichtung (15) an wenigstens drei der radialen Laschen (43) der Trägerplatten seitlich angreift.

18. Vorrichtung nach Anspruch 17, dadurch gekennzeichnet, dass die zweite Transporteinrichtung von einem Träger in Form eines Winkels gebildet wird, der von Rollen (25) auf zwei parallelen Schienen (26) geführt wird.

19. Vorrichtung nach Anspruch 18, dadurch gekennzeichnet, dass der Winkel drei Haltespitzen (44) aufweist, die mit Bohrungen (45) der drei radialen Laschen (43) der Trägerplatte zusammenwirken.

20. Vorrichtung nach Anspruch 18 oder 19, dadurch gekennzeichnet, dass die Schienen (26) ein sich änderndes Profil aufweisen.

21. Vorrichtung nach einem der Ansprüche 5 bis 20, dadurch gekennzeichnet, dass die zweite Transporteinrichtung (15) weiterhin ein Verriegelungselement (46) für die Verriegelung der Trägerplatte an ihrem Platz aufweist.

22. Vorrichtung nach einem der Ansprüche 18 bis 21, dadurch gekennzeichnet, dass die zweite Transporteinrichtung (15) auf ihren Schienen (26) manuell verschiebbar ist.

23. Vorrichtung nach einem der Ansprüche 11 bis 16, dadurch gekennzeichnet, dass sie weiterin einen einziehbaren Anschlag (28) enthält, um wenn er sich an Ort und Stelle befindet, die genaue Positionierung der ersten Transporteinrichtung (14) an einem vorgegebenen Punkt ihrer Gleitbahn zu gewährleisten, und um eine Verschiebung über diesen Punkt hinaus zu ermöglichen, wenn er eingezogen ist, um die Freigabe der Trägerplatte von der festen Auflage (6) sicherzustellen.

24. Vorrichtung nach Anspruch 23, dadurch gekennzeichnet, dass der Anschlag (28) eine Stange aus hoch gehärtetem Material ist, durch einen Elektromagnet betätigt wird und seitlich von einem V-förmig genuteten Teil (32) gehalten wird.

25. Vorrichtung nach Anspruch 16, dadurch gekennzeichnet, dass die höhenverstellbare Welle (20) der ersten Transporteinrichtung an ihrem unteren Ende mit einem quer verlaufenden Hebel (66) verbunden ist, dessen einer Arm (67) von einem Motor betätigt wird und dessen anderer Arm (69) die genannten Luftwiderlager (70) trägt.

Fig.1

Fig. 2

Fig. 3

Fig. 4

Fig.5